# EUROPÄISCHE PATENTANMELDUNG

(11) **EP 0 697 329 A1**
(43) Veröffentlichungstag der Anmeldung: **21.02.1996**
(21) Anmeldenummer: 95116839.2
(22) Anmeldetag: 31.12.1991
(51) Int. Cl.: B62M 23/00, B62M 17/00

(54) **Fahrrad mit Vorder- und Hinterradantrieb, insbesondere geländegängiges Fahrrad**

(30) Priorität: 02.01.1991 AT 3/91
(62) Teilanmeldung aus: 92901783.8
(71) Anmelder: SCHWARZENBACHER, Rudolf, A-5602 Kleinarl (AT)
(72) Erfinder: SCHWARZENBACHER, Rudolf, A-5602 Kleinarl (AT)
(74) Vertreter: Secklehner, Günter, Dr.

(57) **Zusammenfassung**

Die Erfindung betrifft ein Fahrrad mit Vorder- und Hinterradantrieb, insbesondere geländegängiges Fahrrad (1), wobei der Antrieb des Hinterrades (5) über eine bekannte Antriebsanordnung (17) mit Tretkurbelwelle, Kettenräder und Kette, gegebenenfalls unter Zwischenschaltung einer Schaltvorrichtung auf eine Nabe des Hinterrades (5) erfolgt und mit einer Antriebsanordnung (22) für das Vorderrad. Die Antriebsanordnung (22) für das Vorderrad (11) weist zumindest ein durch eine flexible Welle (47) gebildetes Übertragungsmittel auf, welches ein mit einer Vorderradnabe (46) drehverbundenes Antriebsrad (55) mit einem mit der Hinterradnabe (43) drehverbundenes Abtriebsrad (54) kraftschlüssig verbindet.

## Beschreibung

Die Erfindung betrifft ein Fahrrad mit einem Vorder- und Hinterradantrieb, insbesondere ein geländegängiges Fahrrad, wie es im Oberbegriff des Patentanspruches 1 beschrieben ist.

Es sind bereits verschiedene Fahrräder bekannt, bei denen zusätzlich zu der Antriebsanordnung für das Hinterrad eine Antriebsanordnung für das Vorderrad vorgesehen ist. Ein bekannter Allradantrieb für die beiden Räder eines Fahrrades gemäß DE-OS 33 19 105 ist mit einem mehrstufigen Wechselgetriebe zur Umsetzung einer über einen Pedalhebel oder einen Motor mit einer hin- und hergehenden oder umlaufenden Bewegung aufgebrachten Antriebskraft auf die Radnabenwellen der Räder versehen.

Des weiteren ist eine Kraftübertragung - gemäß der DE-OS 38 31 890 - bekannt, bei der das Hinterrad und gegebenenfalls das Vorderrad über eine stufenlos regulierbare Kraftübertragung durch Ausnutzung einer pendelnden Schwenkbewegung eines Pedalhebels angetrieben werden kann.

Schließlich sind noch Antriebsanordnungen mit getrennten Kurbeltrieben für das Hinterrad und das Vorderrad eines Fahrrades bekannt, bei welchen ein Kurbeltrieb mit den Beinen und der andere mit den Händen betätigt wird. Diese bekannten Allradantriebe sind sehr aufwendig, da sie viele Antriebselemente bzw. Getriebeelemente für die Übertragung der Antriebskraft auf die Räder erfordern.

Der vorliegenden Erfindung liegt nunmehr die Aufgabe zugrunde, ein Fahrrad, insbesondere geländegängiges Fahrrad zu schaffen, bei dem das Hinterrad und das Vorderrad wahlweise gemeinsam angetrieben werden können, und bei dem die Antriebsanordnungen eine geringe Anzahl von Antriebselementen erfordern.

Diese Aufgabe der Erfindung wird durch die im kennzeichnenden Teil des Patentanspruches 1 wiedergegebenen Merkmale gelöst. Der überraschende Vorteil dieser die Antriebselemente des Hinterrades und des Vorderrades verbindenden Antriebsanordnung liegt im simultanen Antrieb des Vorderrades in direkter Abhängigkeit vom Drehverhalten des Hinterrades, wobei unabhängig von etwaigen Übersetzungsänderungen durch eine Schalteinrichtung in der Antriebsanordnung für das Hinterrad die Kraftübertragung auf das Vorderrad simultan erfolgt, wobei durch einen hohen Wirkungsgrad eine gute Ausnutzung der Antriebsenergie erreicht wird.

Von Vorteil ist aber auch eine Weiterbildung nach Patentanspruch 2, wodurch die flexiblen Antriebswellen an den Lauf der Rahmenelemente eines Fahrrades angepaßt werden können.

Möglich ist auch eine Ausbildung nach Patentanspruch 3, wodurch die Antriebselemente mit den Antriebsachsen nur bei Auftreten einer Antriebsleistung gekuppelt sind und die Antriebsanordnung, z.B. beim Bergabfahren nicht mitbewegt wird.

Eine andere Ausführungsvariante ist im Patentanspruch 4 beschrieben, wodurch sich die Antriebsanordnung für das Vorderrad wahlweise weggeschaltet werden kann, um z.B. beim Betrieb des Fahrrades im ebenen Gelände bzw. auf befestigtem Untergrund die Reibungsverluste, die bei einer größeren Anzahl von Antriebselementen höher sind, zu vermindern.

Es ist auch eine Ausbildung nach Patentanspruch 5 von Vorteil, wodurch ein Schutz des Betreibers des Fahrrades vor dem bewegten Antriebsmitteln erreicht werden kann.

Schließlich ist aber auch eine Weiterbildung nach Patentanspruch 6 möglich, wodurch ein Schutz der Übertragungsmittel vor Beschädigungen, wie auch eine Verminderung der Unfallgefahr durch abstehende Elemente erreicht wird.

Zum besseren Verständnis der Erfindung wird diese anhand der in den Zeichnungen dargestellten Ausführungsbeispiele näher erläutert.

Es zeigen:
- Fig. 1: ein erfindungsgemäßes Fahrrad mit einer zusätzlichen Antriebsanordnung für das Vorderrad in Seitenansicht;
- Fig. 2: eine erfindungsgemäße Übertragungsvorrichtung der Antriebsvorrichtung nach Fig.1 in schematischer schaubildlicher Darstellung;
- Fig. 3: die erfindungsgemäße Antriebsvorrichtung für das Vorderrad mit der Übertragungsvorrichtung gemäß Fig.2 in Seitenansicht;
- Fig. 4: die erfindungsgemäße Antriebsvorrichtung in Stirnansicht geschnitten, gemäß den Linien IV-IV in Fig.3;
- Fig. 5: eine andere Ausführungsvariante eines Fahrrades mit einer erfindungsgemäßen Allradantriebsanordnung in Draufsicht;
- Fig. 6: das Fahrrad gemäß Fig.5 in Seitenansicht;
- Fig. 7: ein Wendegetriebe für eine erfindungsgemäße Antriebsanordnung in Seitenansicht;
- Fig. 8: eine weitere Variante einer erfindungsgemäßen Antriebsanordnung für ein Fahrrad von vorne in Ansicht;
- Fig. 9: ein Antriebsschema für ein erfindungsgemäßes Fahrrad mit einer Antriebsanordnung für das Hinter- und das Vorderrad;
- Fig.10: eine andere Variante der Antriebsordnung.

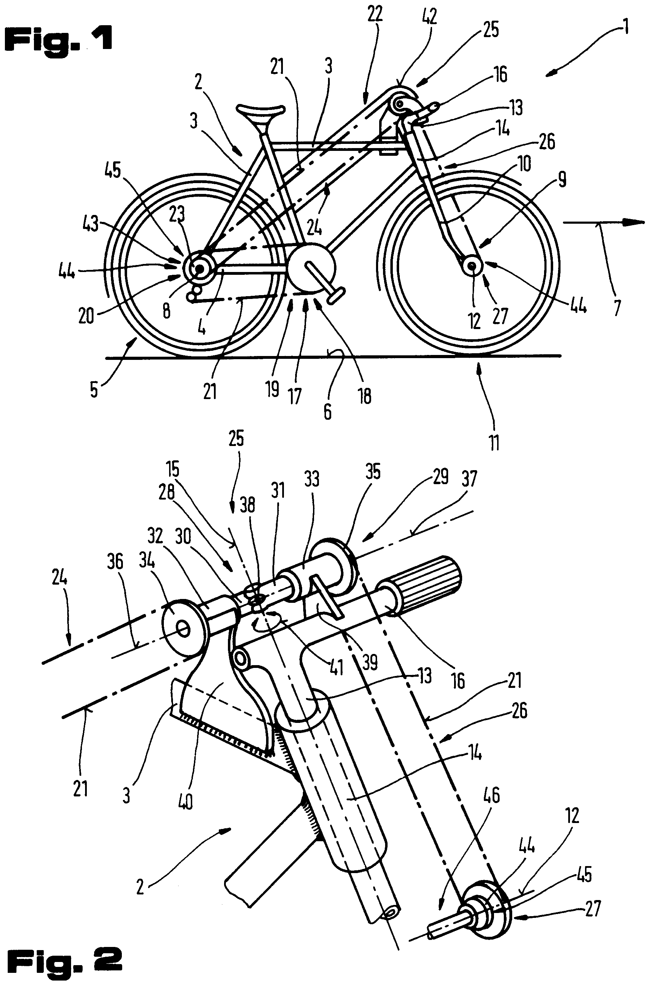

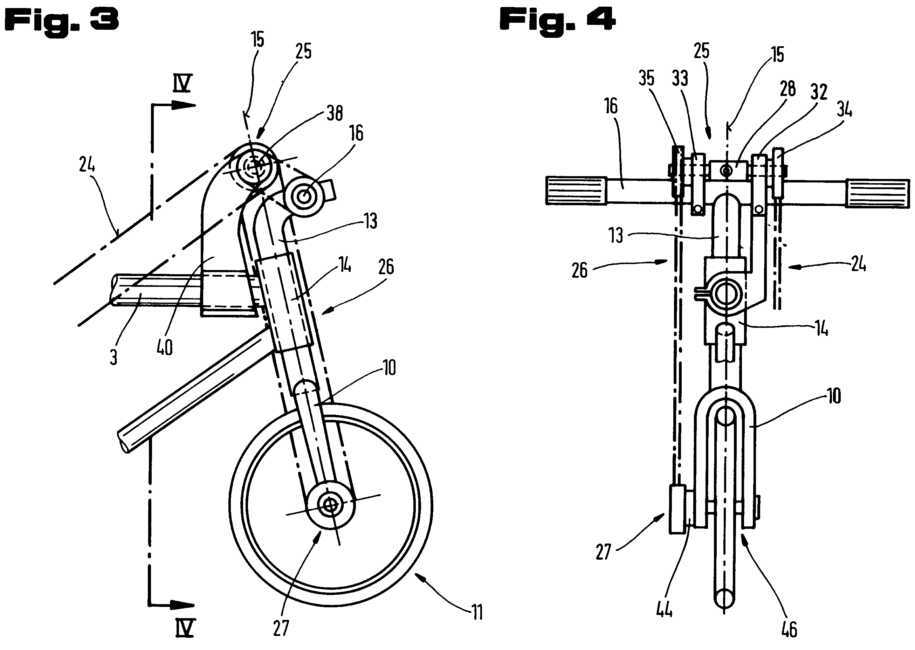

In Fig.1 - 4 ist ein Fahrrad 1 gezeigt. Das Fahrrad 1 wird aus einem Rahmen 2, insbesondere aus rohrförmigen Rahmenteilen 3,4 welche an Knotenpunkten miteinander verschweißt oder verlötet, sind, gebildet. In Aufnahmen des gabelförmigen Rahmenteiles 4 ist ein Hinterrad 5 um eine zu einer Aufstandsfläche 6 waagrecht und im Bezug auf eine Fahrtrichtung - Pfeil 7 - senkrecht verlaufend angeordnete Achse 8 drehbar gelagert.

In einer Aufnahme 9 eines gabelförmigen Rahmenteiles 10 ist ein Vorderrad 11 um eine parallel zur Achse 8 angeordneten Achse 12 drehbar gelagert. Der gabelförmige Rahmenteil 10 weist in zur Aufstandsfläche 6 entgegengesetzter Richtung einen zylindrischen Fortsatz 13 auf, der in einem in etwa vertikal angeordneten rohrförmigen Rahmenteil 14 um eine Schwenkachse 15 drehbar gelagert ist. Zur Durchführung einer Schwenkbewegung um die Schwenkachse 15 weist der Fortsatz 13 eine Lenkstange 16 auf, welche in etwa parallel zur Aufstandsfläche 6 auf dem Fortsatz 13 befestigt ist.

Das Fahrrad 1 weist in bekannter Weise eine Antriebsanordnung 17 für das Hinterrad 5 gebildet durch einen Tretkurbeltrieb 18, Übertragungsmittel 19 und Antriebselemente 20 auf. Das Übertragungsmittel 19 wird in bevorzugter Weise durch eine Rollenkette 21 gebildet. Der Tretkurbeltrieb 18 und das Antriebselement 20 weisen Zahnräder, -scheiben, -kränze, etc. auf. Weiters umfaßt die Antriebsanordnung 17 eine Schalteinrichtung zur Veränderung des Übersetzungsverhältnisses zwischen dem Tretkurbeltrieb 18 und dem Hinterrad 5. Eine solche Schalteinrichtung bei welcher durch Umlegen der Rollenkette 21 zwischen unterschiedlichen Zahnradpaarungen zwischen dem Tretkurbeltrieb 18 und Antriebselementen 20 des Hinterrades 5 ist z.B. als Shimano-Schaltung Type NEW wie sie bei Fahrrädern, insbesondere Mountainbikes der Firma KTM eingesetzt wird, bekannt. Zwischen dem Hinterrad 5 und dem Vorderrad 11 ist zur Übertragung eines Drehmomentenanteiles des dem Hinterrad 5 über die Antriebsanordnung 17 zugeführten Drehmomentes eine Antriebsanordnung 22 angeordnet. Diese umfaßt ein mit dem Antriebselement 20 drehfest verbundenes Antriebselement 23, ein Übertragungsmittel 24, z.B. eine Rollenkette 21 und eine Übertragungsvorrichtung 25, insbesondere im Bereich der Lenkstange 16, von der die Weiterleitung des Drehmomentes an das Vorderrad 11 über ein, insbesondere endloses Übertragungsmittel 26, z.B. eine Rollenkette 21 auf ein Antriebselement 27 des Vorderrades 11 erfolgt.

In den Fig.2 bis 4 ist die Übertragungsvorrichtung 25 und deren Anordnung im Bereich der Lenkstange 16 bzw. der Schwenkachse 15 näher gezeigt. Die Übertragungsvorrichtung 25 wird durch ein, ein Kardangelenk 28 aufweisendes Kupplungselement 29 und Kupplungsteilen 30,31 des Kupplungselementes 29 zugeordnete Lagerelemente 32,33 für die drehbewegliche Lagerung der Kupplungsteile 30,31 gebildet. Auf den Kupplungsteilen 30,31 sind mit diesen drehfest verbunden Antriebselemente 34,35, wie Kettenräder für die endlosen Übertragungsmittel 24,26, z.B. den Rollenketten 21, angeordnet. Mittelachsen 36,37 der Kupplungsteile 30,31 bilden mit der Schwenkachse 15 einen gemeinsamen Schnittpunkt 38, wobei die Mittelachsen 36,37 in etwa im rechten Winkel zu der Schwenkachse 15 angeordnet sind. Das, das Kupplungsteil 31 lagernde Lagerelement 33, ist über eine Distanzlasche 39 auf der Lenkstange 16 befestigt, während das weitere Lagerelement 32 über eine Distanzlasche 40 am Rahmenteil 3 des Rahmens 2 befestigt ist. Durch die Anordnung des Kardangelenks 28 zwischen den Kupplungsteilen 30,31 und dessen Position in Bezug auf die Schwenkachse 15 kann das Drehmoment unabhängig von einer Schwenkbewegung gemäß einem kreisförmigen - Doppelpfeil 41 - übertragen werden. Anstelle des gezeigten Kardangelenks 28 können auch mehrgelenkige kardanische Kupplungselemente 29 eingesetzt werden um auch größere Schwenkbewegungen des Vorderrades 11 um die Schwenkachse 15 zu ermöglichen. Selbstverständlich können die Übertragungsmittel 24,26 und die Übertragungsvorrichtung 25 mit den Antriebselementen 34,35 innerhalb von Verkleidungselementen 42, wie in Fig.1 dargestellt, insbesondere aus leichten Kunststoffbauteilen, angeordnet sein.

Die drehfeste Verbindung des Antriebselementes 23 mit einer Hinterradnabe 43 kann über eine bekannte Freilaufeinrichtung 44 bzw. eine ausrückbare Kupplungseinrichtung 45 erfolgen, wodurch die Antriebsanordnung 22 bedarfsweise weg- bzw. zugeschaltet werden kann. Selbstverständlich ist es auch möglich, die Freilaufeinrichtung 44 und bzw. oder die Kupplungseinrichtung 45 zwischen dem Antriebselement 27 und einer Vorderradnabe 46 des Vorderrades 11 anzuordnen.

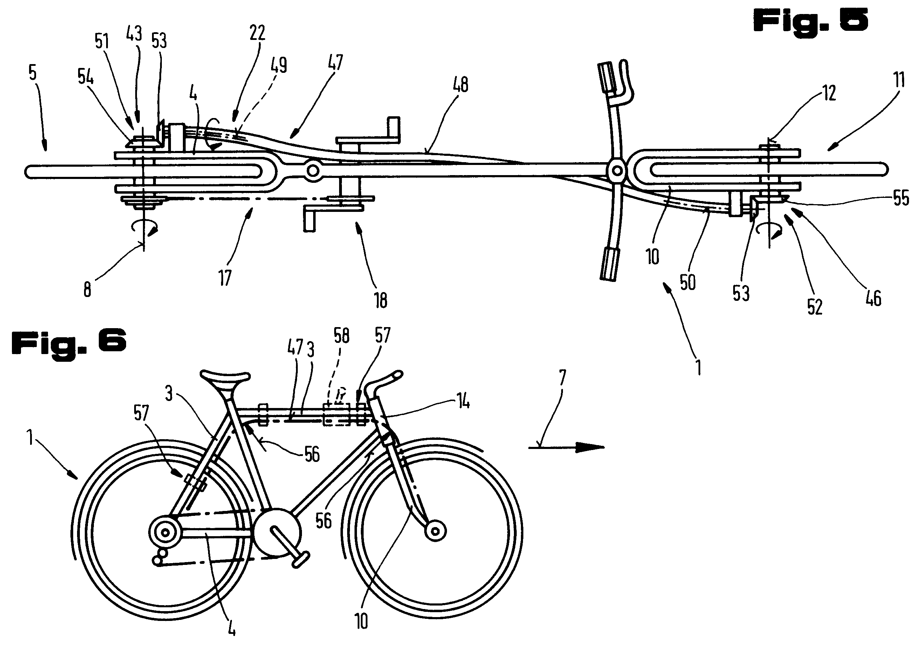

In den Fig.5 und 6 ist das Fahrrad 1 mit einer anderen Variante der Antriebsanordnung 22 gezeigt. Bei dieser Variante ist eine flexible Welle 47 als Übertragungsmittel zwischen der Hinterradnabe 43 und der Vorderradnabe 46 angeordnet. Die flexible Welle 47 weist eine feststehende Ummantelung 48 auf, in welcher eine insbesondere aus einem Drahtseil gebildete Innenseele 49 drehbar gelagert ist. Die Endbereiche der Ummantelung 48 sind an dem dem Hinterrad 5 und dem Vorderrad 11 zugeordneten Rahmenteilen 4,10 befestigt, wobei eine Längsmittelachse 50 der Welle 47 in etwa einen rechten Winkel zu den Achsen 8,12 des Hinterrades 5 und des Vorderrades 11 bildet. Die kraftschlüssige Antriebsverbindung zwischen dem Hinterrad 5 und dem Vorderrad 11 mit der Innenseele 49 wird über Kegelradanordnungen 51,52 mit jeweils einem Ritzel 53 an den Enden der flexiblen Welle 47 und einem Abtriebsrad 54 an der Hinterradnabe 43 und einem Antriebsrad 55 an der Vorderradnabe 46 erreicht. Dadurch wird das über den Tretkurbeltrieb 18 und die Antriebsanordnung 17 aufgebrachte Antriebsdrehmoment gleichermaßen auf das Hinterrad 5 und das Vorderrad 11 aufgeteilt. Zur Erreichung der gleichen Drehrichtung des Hinterrades 5 und des Vorderrades 11 sind die Kegelradanordnungen 51,52 an im Bezug auf die Fahrtrichtung - Pfeil 7 - unterschiedlichen Seiten der Hinter- bzw. Vorderradnabe 43,46 angeordnet. Eine spezielle Linienführung der flexiblen Welle 47 zur Vermeidung kleiner Umlenkradien 56 ist längs den Rahmenteilen 3,10,14 gezeigt. Damit ist es auch möglich, die flexible Welle 47 mittels Halteelementen 57, z.B. Klammern an den Rahmenteilen 3,10,14 zu befestigen, wie es auch möglich ist, die flexible Welle 47 in Teilbereichen innerhalb der rohrförmigen Rahmenteile 3,10 zu führen.

In strichlierten Linien ist die Anordnung eines vorzugsweise schaltbaren Wendegetriebes 58, durch welches abgestufte Drehmomente auf das Hinter- bzw. Vorderrad 5,11 aufgebracht werden können, gezeigt. Dieses Wendegetriebe 58 teilt die flexible Welle 47 in zwei Stränge jeweils zwischen der Hinterradnabe 43 und dem Wendegetriebe 58 und diesem und der Vorderradnabe 46. Gleichzeitig bewirkt das Wendegetriebe 58 eine Drehrichtungsumkehr zwischen den beiden Strängen der flexiblen Welle 47, wodurch bei der Anwendung des Wendegetriebes 58 die Kegelradanordnungen 51,52 an derselben Seite der Hinterrad- bzw. Vorderradnabe 43,46 angeordnet werden können.

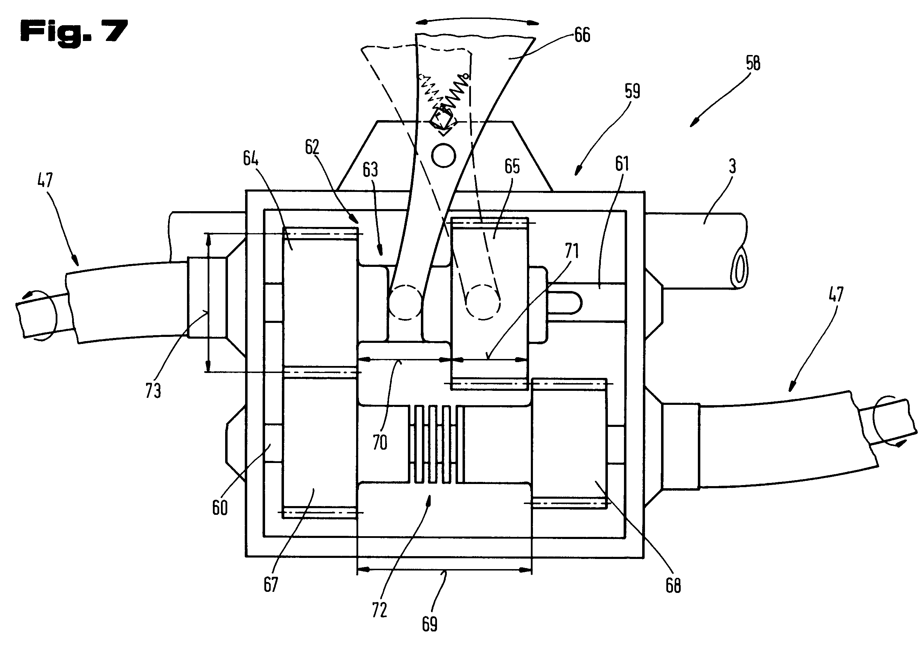

In der Fig.7 ist das Wendegetriebe 58 gezeigt. In einem in etwa quadratischem Gehäuse 59, welches am Rahmenteil 3 z.B. mit einer Rohrschelle befestigt ist, sind parallel zueinander verlaufend Wellenstummel 60,61 zweier Stränge der flexiblen Welle 47 drehbar gelagert angeordnet. Auf dem Wellenstummel 61 ist ein einstückiges Doppelzahnrad 62 drehfest über einen in eine ringförmige Nut 63 zwischen Zahnkränzen 64, 65 des Doppelzahnrades 62 gabelförmig eingreifenden Schalthebel 66 in Längsrichtung des Wellenstummels 61 längsverschieblich gelagert. Am parallel verlaufenden Wellenstummel 60 sind Zahnkränze 67,68 in einer Distanz 69 zueinander angeordnet, welche größer ist, als eine Distanz 70 zwischen den Zahnkränzen 64,65 zuzüglich einer Breite 71 des Zahnkranzes 65, wodurch bei einer Längsverschiebung des Doppelzahnrades 62 jeweils ein Zahnkranz 64,65 mit einem Zahnkranz 67,68 zusammenwirken kann. Die Zahnkränze 67,68 sind über eine Friktionskupplung 72 relativ zueinander drehbeweglich, wobei einer der Zahnkränze 67,68 mit dem Wellenstummel 60 drehfest verbunden ist.

Durch Abstufung vom Nenndurchmesser 73 der Zahnkränze 64,65,67,68 kann in bekannter Weise eine zumindest zweistufige Übersetzungsänderung in einem festgelegten Verhältnis vorgenommen werden, wobei es zweckmäßig ist, zumindest ein Übersetzungsverhältnis durch Wahl des gleichen Nenndurchmessers 73 der in Eingriff zu bringenden Zahnkränzen 64,67 bzw. 65,68 für das Übersetzungsverhältnis 1:1 auszulegen. Damit wird auch das Antriebsdrehmoment zu gleichen Teilen am Hinterrad 5 und am Vorderrad 11 wirksam. Ein davon abweichendes Übersetzungsverhältnis ist dann zweckmäßig, wenn das Antriebsdrehmoment ungleichmäßig aufgeteilt werden soll, z.B. beim Befahren von Steigungen wo die Belastung am Hinterrad größer ist, und daher ein höheres Antriebsmoment wirksam werden kann. Die Angleichung der Drehzahlen zwischen dem Hinterrad 5 und dem Vorderrad 11 erfolgt in diesem Fall durch die über die Friktionskupplung 72 mögliche Relativbeweglichkeit der Zahnkränze 67,68 zueinander.

Ein vom Übersetzungsverhältnis 1:1 abweichendes Verhältnis, welches umschaltbar eingestellt werden kann, ist insbesondere von Vorteil, wenn auf Grund von besonderen Einsatzbedingungen an dem Fahrrad 1 unterschiedlich große Räder zur Anwendung kommen. So ist es bei verschiedenen Disziplinen des Fahrradsportes üblich, ein Vorderrad 11 einzusetzen, welches einen kleineren Durchmesser als das Hinterrad 5 aufweist. In einem solchen Fall wird im Wendegetriebe 58 bei Wahl des entsprechenden Übersetzungsverhältnisses die unterschiedliche Drehzahl von dem Hinterrad 5 und dem Vorderrad 11 ausgeglichen.

Für einen sicheren Betrieb eines Fahrrades in einem unebenen Gelände und auf unbefestigten Fahrbahnen wird durch einen zusätzlichen Antrieb des Vorderrades eine entsprechend höhere Betriebssicherheit erreicht. Vorrichtungen wie z.B. Freilaufeinrichtungen können dabei einsatzbedingt einen Antriebsstrang z.B. zum Vorderrad dermaßen unterbrechen, daß die Übertragungsmittel stillgesetzt werden, wenn keine Vortriebskraft aufzubringen ist, wie z.B. beim Befahren von Gefällestrecken. Anstelle des auf mechanischem Prinzip wirkenden Wendegetriebes 58, der Friktionskupplung 72, kann selbstverständlich auch ein auf hydraulischem Prinzip basierender Drehmomentenwandler zur stufenlosen Wahl eines Übersetzungsverhältnisses, wie auch die Anordnung einer sog. Viskosekupplung zur Drehzahlabstimmung bei einem unterschiedlichem Übersetzungsverhältnis für das Hinterrad bzw. das Vorderrad treten.

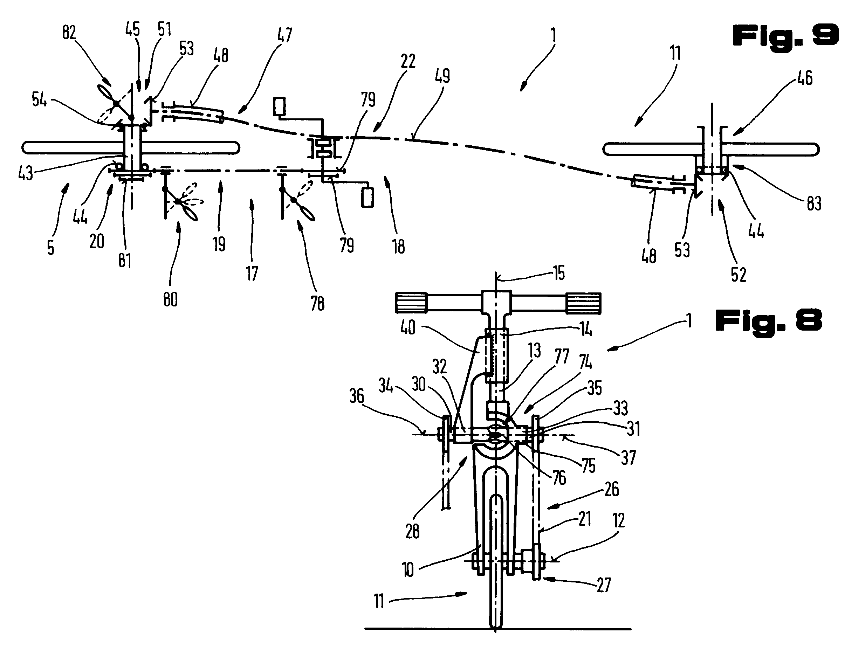

In der Fig.8 ist eine weitere Variante einer Antriebsanordnung für das Vorderrad 11 eines Fahrrades 1 gezeigt. Der das Vorderrad 11 lagernde gabelförmige Rahmenteil 10 weist in Richtung des im Rahmenteil 14 um die Schwenkachse 15 schwenkbar gelagerten Fortsatzes 13 einen C-förmigen Übergangsbereich 74 auf. Parallel zur Achse 12 des Vorderrades 11 ist in einem Ansatz 75 des C-förmigen Übergangsbereiches 74 das Lagerelement 33 für den Kupplungsteil 31 des Kardangelenkes 28 angeordnet. Auf einem Wellenstummel 76 des Kupplungsteiles 31 ist das Antriebselement 35 befestigt. Am feststehenden Rahmenteil 14 ist über die Distanzlasche 40 das weitere Lagerelement 32 für den Kupplungsteil 30 und das auf diesem befestigten Antriebselement 34 angeordnet, wobei in unverschwenkter Lage des Vorderrades 11 um die Schwenkachse 15 und in Bezug auf eine Längsachse des Fahrrades 1, die Mittelachsen 36,37 der Kupplungsteile 30,31 zueinander fluchtend ausgerichtet sind. In einem durch den C-förmigen Übergangsbereich 74 gebildeten Freiraum 77 ist das die Kupplungsteile 30,31 verbindende Kardangelenk 28 angeordnet, in dessen Mittelpunkt sich die Schwenkachse 15 und die Mittelachsen 36,37 schneiden. Damit erfolgt die Übertragung des Antriebsdrehmomentes über das unverschenkbar am Rahmenteil 14 befestigte Antriebselement 34 und das Kardangelenk 28 in das um die Schwenkachse 15 verschwenkbare Antriebselement 35 und über das Übertragungsmittel 26 z.B. die Rollenkette 21 in das Antriebselement 27 des Vorderrades 11. Die Anordnung des Kardangelenkes 28 ermöglicht somit die Übertragung des Antriebsdrehmomentes zwischen den beiden relativ zueinander verschwenkbaren Antriebselementen 34,35.

In der Fig.9 ist ein Antriebsschema für die Antriebsanordnung des Fahrrades 1 mit der Antriebsanordnung 22 für das Vorderrad 11 gezeigt, wobei zur deutlichen Darstellung der Antriebselemente auf die Rahmenteile des Fahrrades 1 verzichtet wurde. Die Antriebsanordnung 17 für das Hinterrad 5 umfaßt den Tretkurbeltrieb 18, das Übertragungsmittel 19, die Antriebselemente 20 und eine Schalteinrichtung 78 im Bereich des Tretkurbeltriebes 18 zum Umlegen des Übertragungsmittels 19 auf unterschiedliche Durchmesser aufweisende Kettenräder 79. Eine weitere Schalteinrichtung 80 ist zum Umlegen des Übertragungsmittels 19 auf unterschiedliche Durchmesser aufweisende Kettenräder 81 für das Hinterrad 5 angeordnet. Über die Kupplungseinrichtung 45, z.B. eine schaltbare Klauenkupplung 82, Friktionskupplung oder dgl., ist mit der Hinterradnabe 43 das kegelförmige Abtriebsrad 54 der Kegelradanordnung 51 in - und außer Eingriff - zu bringen. Zwischen der Kegelradanordnung 51 und der weiteren mit der Vorderradnabe 46 drehmomentfest zusammenwirkenden Kegelradanordnung 52 ist die flexible Welle 47 mit der Ummantelung 48 am Fahrrad 1 drehfest angeordnet und lagert drehbeweglich die Innenseele 49 mit den mit der Innenseele 49 drehfest verbundenen Ritzel 53.

Um ohne Blockierung der Antriebsanordnung 22 bzw. der flexiblen Welle 47 im Rollzustand des Fahrrades 1, d.h. ohne Aufbringung eines Antriebsdrehmomentes z.B. ein Bergabfahren zu ermöglichen, sind zwischen dem Antriebselement 20 und der Hinterradnabe 43 und der Kegelradanordnung 51 und der Vorderradnabe 46 bekannte Freilaufeinrichtungen 44, wie z.B. nur in einer Richtung Drehkraft übertragende Rollenelemente 83 oder dgl. angeordnet.

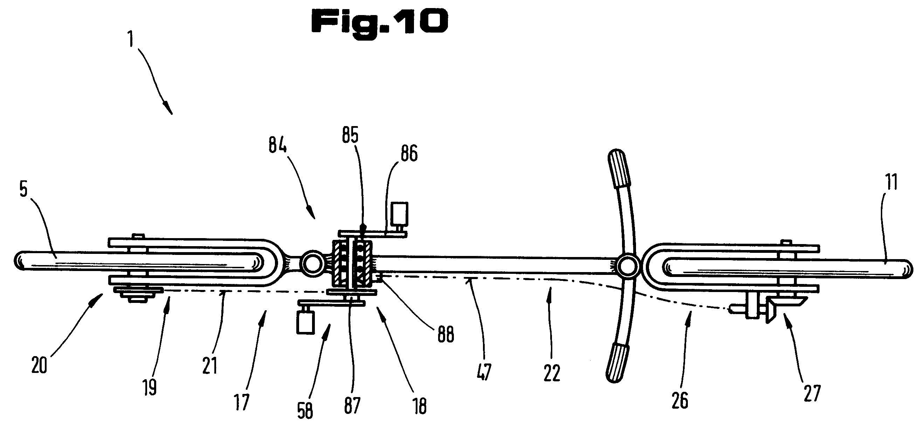

In der Fig.10 ist ein Antriebsschema für die Antriebsanordnung des Fahrrades 1 mit der Antriebsanordnung 17 für das Hinterrad 5 und der Antriebsanordnung 22 für das Vorderrad 11 gezeigt. Dabei bildet der Tretkurbeltrieb 18 und das Wendegetriebe 58 eine Antriebseinrichtung 84 in der eine Schalteinrichtung 85 für unterschiedliche Übersetzungsverhältnisse zwischen einer mit Tretkurbeln 86 verbundenen Antriebsachse 87 und einer Abtriebswelle 88 angeordnet ist. Die Schalteinrichtung 85 basiert dabei auf dem Prinzip der bekannten Naben- Innenschaltung. Von der Antriebseinrichtung 84 wird das über den Tretkurbeltrieb 18 aufgebrachte Antriebsdrehmoment über die Antriebsanordnung 17 dem Antriebselement 20 des Hinterrades 5 und der Antriebsanordnung 22 dem Antriebselement 27 des Vorderrades 11 zugeleitet, wobei die Übertragungsmittel 19,26 durch Rollenketten 21 bzw. flexible Wellen 47 gebildet sein können, wobei bevorzugt das dem Vorderrad 11 zugeordnete Übertragungsmittel 26 durch die flexible Welle 47 gebildet ist.

Zum besseren Verständnis der Erfindung wurden in den Ausführungsbeispielen einzelne Teile in unproportionalen Maßstab verzerrt dargestellt. Des weiteren können auch einzelne der in den Ausführungsbeispielen insgesamt beschriebenen Merkmalskombinationen eigenständige, erfindungsgemäße Lösungen bilden.

### Bezugszeichenaufstellung

- 1: Fahrrad
- 2: Rahmen
- 3: Rahmenteil
- 4: Rahmenteil
- 5: Hinterrad
- 6: Aufstandsfläche
- 7: Pfeil
- 8: Achse
- 9: Aufnahme
- 10: Rahmenteil
- 11: Vorderrad
- 12: Achse
- 13: Fortsatz
- 14: Rahmenteil
- 15: Schwenkachse
- 16: Lenkstange
- 17: Antriebsanordnung
- 18: Tretkurbeltrieb
- 19: Übertragungsmittel
- 20: Antriebselement
- 21: Rollenkette
- 22: Antriebsanordnung
- 23: Antriebselement
- 24: Übertragungsmittel
- 25: Übertragungsvorrichtung
- 26: Übertragungsmittel
- 27: Antriebselement
- 28: Kardangelenk
- 29: Kupplungselement
- 30: Kupplungsteil
- 31: Kupplungsteil
- 32: Lagerelement
- 33: Lagerelement
- 34: Antriebselement
- 35: Antriebselement
- 36: Mittelachse
- 37: Mittelachse
- 38: Schnittpunkt
- 39: Distanzlasche
- 40: Distanzlasche
- 41: Doppelpfeil
- 42: Verkleidungselement
- 43: Hinterradnabe
- 44: Freilaufeinrichtung
- 45: Kupplungseinrichtung
- 46: Vorderradnabe
- 47: Welle
- 48: Ummantelung
- 49: Innenseele
- 50: Längsmittelachse
- 51: Kegelradanordnung
- 52: Kegelradanordnung
- 53: Ritzel
- 54: Abtriebsrad
- 55: Antriebsrad
- 56: Umlenkradius
- 57: Halteelement
- 58: Wendegetriebe
- 59: Gehäuse
- 60: Wellenstummel
- 61: Wellenstummel
- 62: Doppelzahnrad
- 63: Nut
- 64: Zahnkranz
- 65: Zahnkranz
- 66: Schalthebel
- 67: Zahnkranz
- 68: Zahnkranz
- 69: Distanz
- 70: Distanz
- 71: Breite
- 72: Friktionskupplung
- 73: Nenndurchmesser
- 74: Übergangsbereich
- 75: Ansatz
- 76: Wellenstummel
- 77: Freiraum
- 78: Schalteinrichtung
- 79: Kettenrad
- 80: Schalteinrichtung
- 81: Kettenrad
- 82: Klauenkupplung
- 83: Rollenelement
- 84: Antriebseinrichtung
- 85: Schalteinrichtung
- 86: Tretkurbel
- 87: Antriebsachse
- 88: Abtriebswelle

## Patentansprüche

1. Fahrrad mit Vorder- und Hinterradantrieb, insbesondere geländegängiges Fahrrad, wobei der Antrieb des Hinterrades über eine bekannte Antriebsanordnung mit Tretkurbelwelle, Kettenräder und Kette, gegebenenfalls unter Zwischenschaltung einer Schaltvorrichtung auf eine Nabe des Hinterrades erfolgt und mit einer Antriebsanordnung für das Vorderrad, dadurch gekennzeichnet, daß die Antriebsanordnung (22) für das Vorderrad (11) zumindest ein durch eine flexible Welle (47) gebildetes Übertragungsmittel aufweist, welches ein mit einer Vorderradnabe (46) drehverbundenes Antriebsrad (55) mit einem mit der Hinterradnabe (43) drehverbundenes Abtriebsrad (54) kraftschlüssig verbindet.

2. Fahrrad nach Anspruch 1, dadurch gekennzeichnet, daß Antriebselemente (23, 27) des Hinter- und bzw. oder des Vorderrades (5, 11) durch Kegelradanordnungen (51, 52) gebildet sind.

3. Fahrrad nach Anspruch 1 oder 2, dadurch gekennzeichnet, daß zumindest ein Antriebselement (23, 27) über eine Freilaufeinrichtung (44) mit der Hinterrad- bzw. Vorderradnabe des Vorder- oder Hinterrades (11, 5) verbunden ist.

4. Fahrrad nach einem oder mehreren der Ansprüche 1 bis 3, dadurch gekennzeichnet, daß das Antriebselement (23) des Hinterrades (5) über eine lösbare Kupplungseinrichtung, z.B. Klauenkupplung (82) mit ener Hinterradnabe (43) des Hinterrades (5) drehbeweglich verbunden ist.

5. Fahrrad nach einem oder mehreren der Ansprüche 1 bis 4, dadurch gekennzeichnet, daß die Antriebsanordnung (22) für das Vorderrad (11), insbesondere die flexible Welle (47), innerhalb diese umfassende Verkleidungselemente (42) angeordnet ist.

6. Fahrrad nach einem oder mehreren der Ansprüche 1 bis 5, dadurch gekennzeichnet, daß die flexible Welle (47) zumindest teilweise innerhalb eines rohrförmigen Rahmenteiles (3, 4, 10, 14) des Fahrrades (1) angeordnet ist.
